# EUROPEAN PATENT SPECIFICATION

(11) **EP 1 366 585 B1**
(45) Date of publication and mention of the grant of the patent: **26.04.2006**
(21) Application number: 02720902.2
(22) Date of filing: 06.02.2002
(51) Int. Cl.: H04J 3/02, H04B 7/212, H04Q 7/20, H04Q 7/24, H04J 3/16, H04L 12/56, H04N 7/173

(54) **FRAME TO FRAME TIMING SYCHRONIZATION SYSTEM AND METHOD**
SYSTEM UND VERFAHREN ZUR ZEITSYNCHRONISATION VON RAHMEN ZU RAHMEN
PROCEDE ET SYSTEME DE SYNCHRONISATION D'HORLOGE DE TRAME A TRAME

(30) Priority: 06.02.2001 US 266475 P
(43) Date of publication of application: 03.12.2003
(73) Proprietor: HARRIS CORPORATION, Melbourne, FL 32919 (US)
(72) Inventor: LOPEZ, Guy, Seattle, WA 98112 (US); PRESTON, Shawn, E., Bellevue, WA 98006 (US); SHAFER, David, C., Bellevue, WA 9805 (US)
(74) Representative: Liesegang, Eva
(86) International application number: PCT/US2002/003189
(87) International publication number: WO 2002/063807

(56) References cited:
- EP-A- 0 917 317
- WO-A-00/28712
- US-A- 5 913 164
- US-A- 5 926 745
- US-A- 5 943 324
- US-A- 5 953 344
- US-A- 5 991 308

## Description

### RELATED APPLICATIONS

The present application is related to co-pending and commonly assigned U.S. Patent Applications S.N. 09/434,832, 09/434,815, 09/434,816, and 09,434,707, each entitled "SYSTEM AND METHOD FOR BROADBAND MILLIMETER WAVE DATA COMMUNICATION". The aforementioned applications are each a divisional of commonly assigned U.S. Patent No. 6,016,313 entitled "SYSTEM AND METHOD FOR BROADBAND MILLIMETER WAVE DATA COMMUNICATION" issued 18 January 2000 and currently undergoing two re-examinations under Application S.N. 90/005,726 and Application S.N. 90/005,974.

The present application claims the priority of co-pending U.S. Provisional Application S.N. 60/266,475 entitled "SOFTWARE PROVISIONAL APPLICATION".

### BACKGROUND OF THE INVENTION

The present invention relates to communication systems and methods for which acquisition and reacquisition of signals in different communication frames is required. More specifically, the disclosed inventive system and method applies to wireless point-to-multipoint time division multiple access communication systems which use a repeating frame format.

In multiple access communication systems, it is common to use a communication hub, or network of hubs, to communicate with one or more sets of remote sites ("remotes"). Typically, such communication is done over an airlink in a repeating frame format protocol, i.e., a format where the communication is broken into multiple frames so as to allow access to the communication airlink by more than one remote site at a time. The frames typically contain a number of time slots where each of the time slots in a frame may transmit information from a separate remote during a particular frame to thereby give the impression of simultaneous communication between a hub and plural remotes. After a frame is transmitted/received, another frame starts. Each frame typically contains different information than the other frames, but not necessarily so. The continuous stream of frames and time slots allow for continuous communication between, for example, the hub and plural remotes, or between one hub and one or more other hubs.

Conventional wireless systems that communicate between a hub and plural remotes are known in the art as multiple access communication systems. One type of multiple access communication system is a time division multiple access ("TDMA") system. In typical TDMA systems, time slots, or time segments, are organized into frames of multiple time slots. For example, ones of the plurality of remotes may send information, such as data, voice, multimedia, control signals, etc., or a combination of the foregoing, to the hub in a frame. Typically, each remote sending information in a frame is assigned a time slot within the frame. The hub also may be given the opportunity within a frame to transmit to one or more of the remotes. Information is typically transmitted to a specific remote or hub during the time slots in the frame according to a time slot assignment to the specific remote or hub.

Hubs and remotes may communicate via a duplexing scheme which allows for the exchange of information in both directions across the airlink. Transmissions from the hub to the remote are termed "downlink" or "forward" transmissions. Transmissions from the remote to the hub are termed "uplink" or "reverse" transmissions. Time division duplex ("TDD") schemes, which are well known in the art, typically divide a frame into forward and reverse portions. The forward and reverse portions, which are generally equal in size, are the same size from frame to frame. Adaptive time division duplex ("ATDD") schemes allow for TDD frames to vary the relative sizes of the forward and reverse portions of the frame depending on, for example, the amount of traffic to be communicated in each direction at a given time. ATDD systems are described in U.S. Patent Applications S.N. 09/434,832, 09/434,815, 09/434,816, and 09,434,707, each entitled "SYSTEM AND METHOD FOR BROADBAND MILLIMETER WAVE DATA COMMUNICATION", each a divisional of U.S. Patent No. 6,016,313 entitled "SYSTEM AND METHOD FOR BROADBAND MILLIMETER WAVE DATA COMMUNICATION" issued 18 January 2000 and currently undergoing two re-examinations under Application S.N. 90/005,726 and Application S.N. 90/005,974.

Frequency division duplexing ("FDD") schemes, which are also well known in the art, allow for duplexing between a hub and remote by separating the transmissions between the hub and remote in frequency space rather than in time.

In communication systems, such as a wireless communication system, the receiver and the transmitter must be synchronized in order for the receiver to make sense of the incoming data stream that was sent by the transmitter. For TDMA systems, it is imperative that each remote transmitter send its information so as to be received by the hub receiver at the proper time. As is known in the art, the hub will typically have a phase lock loop circuit with a local oscillator, such as a voltage controlled oscillator, that generates a signal with the same frequency as the carrier wave sent by the remote on which the data is superimposed. In some systems, the hub may include a simple input node to receive a replicated carrier wave generated somewhere else than at the hub. Part of the synchronization process is the acquisition of the signal. Once a signal is received by the receiver, the signal must be acquired, i.e., the frequency and the phase of the incoming data must be known to the receiver so that the receiver circuitry can determine, for example, symbol timing so that the incoming data can be sampled at the proper time.

Typical prior art systems acquire an incoming signal by use of a unique set of data bits, known as a "unique word", near the beginning of a message in a time slot. The unique word is known by the receiver at the hub. The hub receiver recognizes the unique word bits as they are received in the incoming signal and the hub adjusts its internal timing so as to be able to sample the incoming bits at the proper time. Prior art systems typically have to reacquire a signal from the same remote every frame by any of a number of known techniques, such as the use of a unique word contained within the signal sent in each time slot in each frame. The unique word takes up valuable time in the time slot that may be utilized for the transmission of data bits. Therefore, the presence of the unique word in each time slot is an inefficient use of the airlink resource. Additionally, the time required to reacquire a received signal slows down the overall effective data bit rate of the system.

Other prior art systems must reacquire each symbol from a remote by calculating the timing phase or determining the unique word for each symbol. However, such systems are not efficient at reacquiring a later-received signal due to the delays inherent in the calculations required to acquire each symbol. Some of these prior art systems have a time slot dedicated to a particular remote so that the hub receiver always knows the sequence of reception of signals: time slot 1 always carriers signals from remote A, time slot 2 always carries signals from remote B, etc. Such prior art systems are not efficient when the amount of data sent between the different remotes to the hub changes from frame to frame. These systems also cannot operate in TDMA systems where there is no relationship between a particular remote and a given time slot.

TDMA point-to-multipoint communication systems, such as those described in the references cited above, are designed to have more remote subscribers than time slots per frame. Consequently, for efficient communications between the hub and remotes of such a system, there is no relationship between a particular remote and a given hub. For example, in a system with four time slots per frame, remote A may transmit in time slot 1 in a first frame, in time slot 3 in the next frame, in time slot 1 the next frame, then time slot 2, time slot 4, etc. It is to be understood that the above system is exemplary only and is not intended to be limiting in any way. The present invention can operate with any number of time slots per frame. Obviously, prior art systems that attempt to derive timing information about a remote from the location of the time slot in the frame will not operate efficiently, if at all, in the system described above.

Further complicating the acquisition problem are systems that operate with varying baud rates. The baud rate may be defined as the number of symbols transmitted per frame. Prior art systems that attempt to reacquire in a later-received frame a signal from a remote by counting the number of symbols received from a previous frame would not perform correctly in a system with varying baud rates.

Thus there is a need for a system and method for communicating in a time division multiple access communication system operating with a repeating frame format which, after a signal from a first subscriber is acquired in a first frame, acquires signals in subsequent frames without relying on timing information contained within the signal in the subsequent frame to thereby overcome the limitations of prior art systems and methods. Additionally, there is a need for a system and method for communicating in a time division multiple access communication system operating with a repeating frame format which, after a signal from a first subscriber is acquired in a first frame, acquires signals in subsequent frames without relying on a calculation of the timing phase for each received symbol/signal.

One embodiment of the present invention avoids the problems and limitations of the prior art by storing at the hub timing information for a signal in a first frame from a plurality of subscribers and using the stored timing information for a one of the plural subscribers for acquiring a signal in a later-received frame from that one subscriber, where such timing information is independent of any time slot information in any of the received frames.

Another embodiment of the present invention avoids the problems and limitations of the prior art by limiting the start of a time slot in any frame to an integer number of airlink timing units after the start of the previous time slot and/or frame.

Accordingly, it is an object of the present invention to obviate many of the above problems in the prior art and to provide a novel system and method for communicating in a repeating frame format between a hub and fixed remotes in a point-to-multipoint time division multiple access wireless communication system, where the frames contain a predetermined number of time slots and a predetermined number of airlink timing units and where the time slots contain an integer number of airlink timing units, and where a signal in a first frame from a one remote is acquired by any well-known method, and wherein the periodicity of the airlink timing units allows for the reacquisition of signals in later-received frames from the first frame without relying on timing information contained in the signals in the later-received frames.

It is another object of the present invention to provide a novel system and method for communicating in a repeating frame format between a hub and fixed remotes in a point-to-multipoint time division multiple access wireless communication system, where the number of ATUs per frame is a constant so as to allow for acquisition of a signal from a remote in frames subsequent to the frame of initial acquisition without requiring timing information within the signal in the subsequent frame.

It is yet another object of the present invention to provide a novel system and method for communicating in a repeating frame format between a hub and fixed remotes in a point-to-multipoint time division multiple access wireless communication system, wherein the size of the time slots within a frame is variable so long as the time slots are each an integer number of ATUs.

It is still another object of the present invention to provide a novel system and method for reacquiring a signal from one of a plurality of remote transmitters in frames subsequent to the frame of initial acquisition in a point-to-multipoint time division multiple access wireless communication system.

These and many other objects and advantages of the present invention will be readily apparent to one skilled in the art to which the invention pertains from a perusal of the claims, the appended drawings, and the following detailed description of the preferred embodiments.

### BRIEF DESCRIPTION OF THE DRAWINGS

Figure 1 is a notional view of a point-to-multipoint communication system with plural hubs and plural remotes.
Figure 2 is a diagram of a repeating frame communication format showing a time slot to frame relationship and the generalized components of a time slot. Also depicted is the changing time slot assignments for the remotes.
Figure 3 is a depiction of a time division duplex frame showing identical time slot durations.
Figure 4 is a depiction of an adaptive time division duplex frame showing asymmetric time slot durations.
Figure 5 is a depiction of a reverse link of two time division duplex frames (or adaptive time division duplex frames) showing an integer number of airlink timing units for each asymmetric time slot. Also depicted is the changing time slot assignments for the remotes.
Figure 6 is a flow chart for reacquiring signals from a remote according to an embodiment of the present invention.
Figure 7 is a functional block diagram of a portion of a hub receiver signal path.

### DESCRIPTION OF PREFERRED EMBODIMENTS

With reference to the drawings, like numerals represent like components throughout the several drawings.

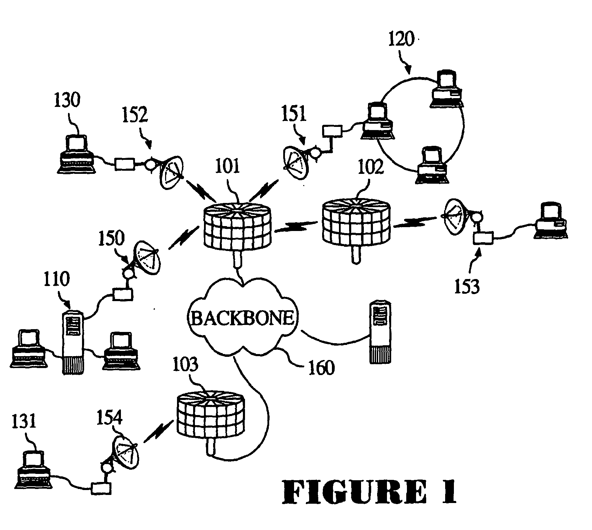

Figure 1 represents a typical wireless communication system for providing high speed, broadband communication. The system in Figure 1 comprises the hubs 101, 102, and 103, the remotes 150 through 154, and the communication backbone 160. The communication backbone may any form of communication means, such as a fiber optic gateway or other broadband data grade connection, T1 communication lines, a cable communication system, the internet, or the like. It should be understood that the number and organization of the hubs and remotes in Figure 1 is for exemplary purposes only and should not be seen as a limitation to the applicability of the present invention in any way. The hubs 101 and 102 communicate with each other via an air link while the hubs 101 and 103 communicate with each other via the communication backbone 160. Each of the hubs communicates with its respect remotes via an airlink. The remotes may be connected, for example, to a single PC, such as the PCs 130 or 131, or to a network, such as the local area networks 110 or 120. A complete description of an exemplary system of Figure 1 may be found in U.S. Patent Applications S.N. 09/434,832, 09/434,815, 09/434,816, and 09,434,707, each entitled "SYSTEM AND METHOD FOR BROADBAND MILLIMETER WAVE DATA COMMUNICATION", each a divisional of U.S. Patent No. 6,016,313 entitled "SYSTEM AND METHOD FOR BROADBAND MILLIMETER WAVE DATA COMMUNICATION" issued 18 January 2000 and currently undergoing two re-examinations under Application S.N. 90/005,726 and Application S.N. 90/005,974.

The number of remotes with which a given hub communicates may be greater than the number of time slots available per frame. For example, a preferred embodiment may have up to 128 remotes communicating with a sector of a hub over frames that have a maximum of 32 time slots. Therefore, it is possible that a particular remote will not communicate with the hub in the same time slot from frame to frame, or a remote may not communicate with the hub each frame. It is advantageous in such a system that the hub be able to acquire the remote in the shortest time possible each time the remote sends a signal to the hub, regardless of the time slot in the frame over which the remote's signal is sent to the hub.

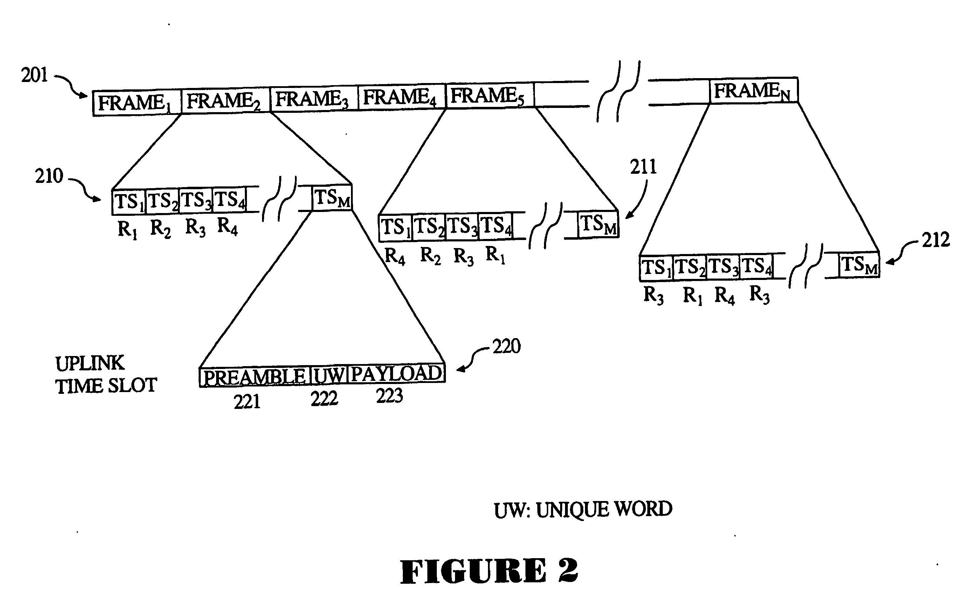

With reference directed to Figure 2, frames 1 through N are received at a hub, such as the hub 101 in Figure 1 (not shown here for clarity), and are depicted at 201 with frames 2, 5, and N shown in exploded detail at 210, 211, and 212, respectively. Each of the exploded views 210, 211, and 212 depict time slots 1 through M as TS₁ through TS_{M}. Also depicted are the time slot assignments for four remotes, R₁, R₂, R₃, and R₄, which are in communication with the hub. As can be seen from Figure 1, the remote time slot assignments may change from frame to frame. For example, R₁ is in TS₁ in frame 2 while R₁ is in TS₄ in frame 5. TSM of frame 2 is further exploded to show typical contents of an uplink time slot, such as the preamble 221, a unique word 222, and the payload 223, each of which perform typical functions as are well known in the art.

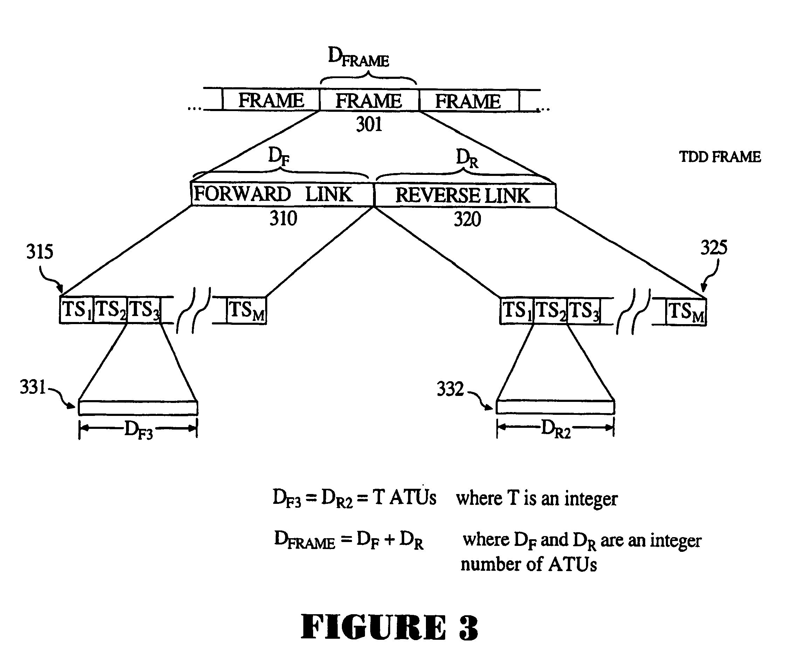

Turning attention to Figure 3, a time division duplex ("TDD") frame 301 is depicted with a forward link portion 310 and a reverse link portion 320. Each of the link portions is further exploded to show time slots 1 through M as TS₁ through TS_{M} as shown at 315 and 325. The duration of TS₃ in the forward link is shown pictorially at 331, D_{F3}, and the duration of TS₂ in the reverse link is shown pictorially at 332, D_{R2}. D_{F3} and D_{R2} are shown as being equal and being an integer number of airlink timing units ("ATUs"). ATUs will be discussed in more detail below. Also shown is the duration of the forward link, D_{F}, and the duration of the reverse link, D_{R}. Figure 3 depicts a symmetric TDD frame, therefore D_{F} = D_{R}. The duration of the frame, D_{FRAME}, is constant from frame to frame. Since the time slots are each an integer number of ATUs and there are an integer number of time slots per forward or reverse link, the forward and reverse links are also comprised of an integer number of ATUs. Similarly, each frame is compose of an integer number of ATUs which is a constant number. Each frame is comprised of the same number of ATUs. This integer relationship of ATUs to time slots and frames is important to the operation of the disclosed inventive system and method.

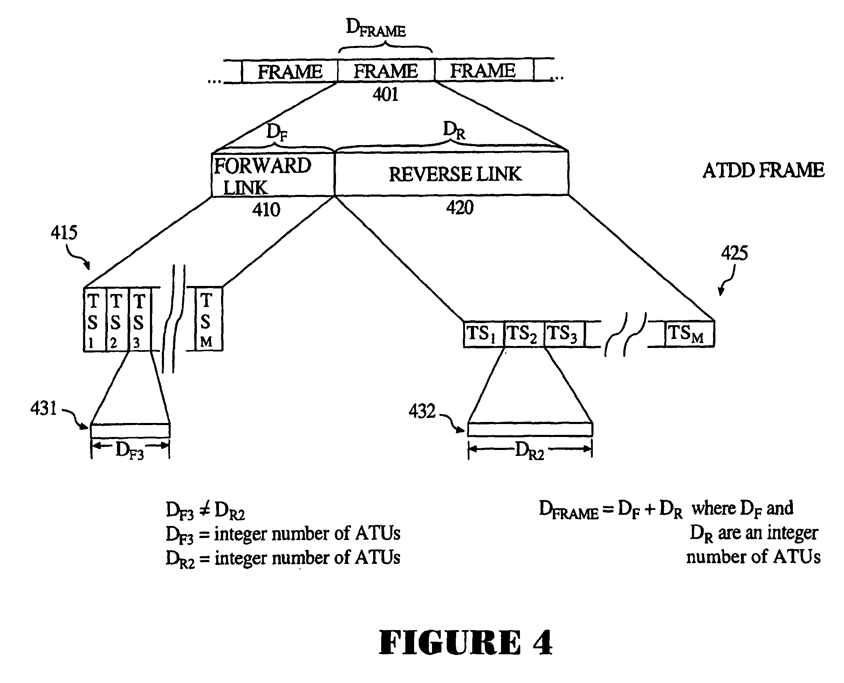

With attention directed now to Figure 4, an adaptive time division duplex ("ATDD") frame 401 is depicted comprising the forward link 410 and the reverse link 420. Figure 4 could also be viewed as an asymmetric TDD frame. Figure 4 is similar to Figure 3, and like numbers in the Figures represent like concepts. The difference between Figures 3 and 4 is that the forward and reverse links, 410 and 420, respectively in Figure 4, are not the.same duration. Additionally, the duration 431 of the time slots 415 of the forward link is dissimilar to the duration 432 of the time slots 425 in the reverse link. However, it is important to note that each of the time slots, whether in a forward link or reverse link, are an integer number of ATUs. Time slot duration must be an integer number of ATUs in order to practice the disclosed inventive system and method. Similarly, the duration of the forward and reverse links, although different, are each an integral number of ATUs. The duration of the frame 401 in Figure 4 does not change and is the same number of ATUs as the duration of the frame 301 in Figure 3.

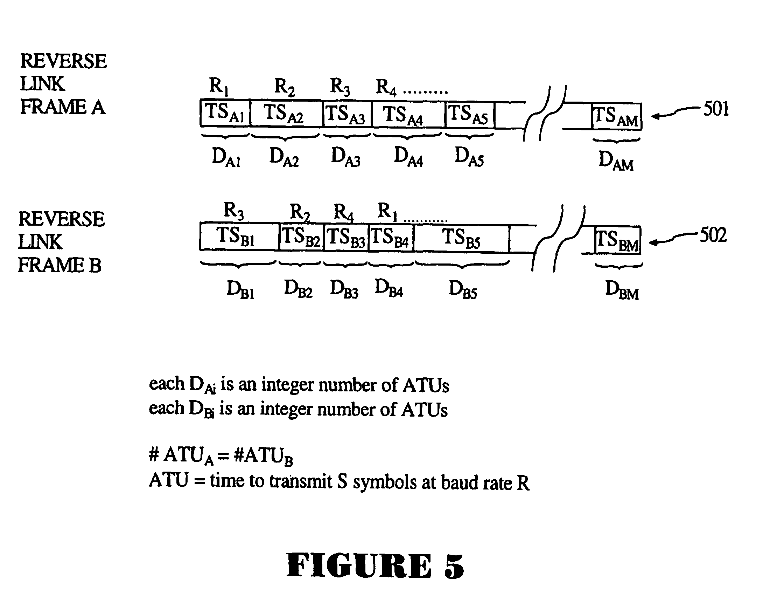

Figure 5 depicts the reverse link of two frames, frame A at 501 and frame B at 502. Each reverse link comprises time slots 1 through M. The reverse link of frame A comprises the time slots TS_{AI} through TS_{AM}. The reverse link of frame B comprises the time slots TS_{BI} through TS_{BM}. Depicted with the time slots 1 through 4 of each frame are the time slot assignments for remotes 1 through 4, R₁ through R₄, respectively, which are in communication with a hub receiving the reverse link frames. Note that the time slot assignments for the remotes may change from frame to frame, as discussed previously with regard to Figure 2. Additionally, the time slot duration, denoted as D_{Ai} for frame A and D_{Bi} for frame B where i = 1 to M, may change from time slot to time slot and frame to frame so long as each time slot is an integer number of ATUs and the reverse links are an integer number of ATUs.

As shown in Figure 5, an ATU is the time required to transmit S symbols at a baud rate R. According to the inventive system and method, an ATU is the granularity of the system. ATUs are the building blocks of time slots and hence frames, i.e., an ATU defines the unit of time by which time slots are defined. Each time slot must be an integral number of ATUs, although each time slot in a frame need not be the same number of ATUs so long as each frame is a constant number of ATUs. By limiting time slots to integer numbers of ATUs, which means a time slot must begin an integer number of ATUs after the beginning of a previous time slot, the inventive system and method can exploit the timing inherent in this regularity to reacquire signals from a remote without relying on timing information within the signal.

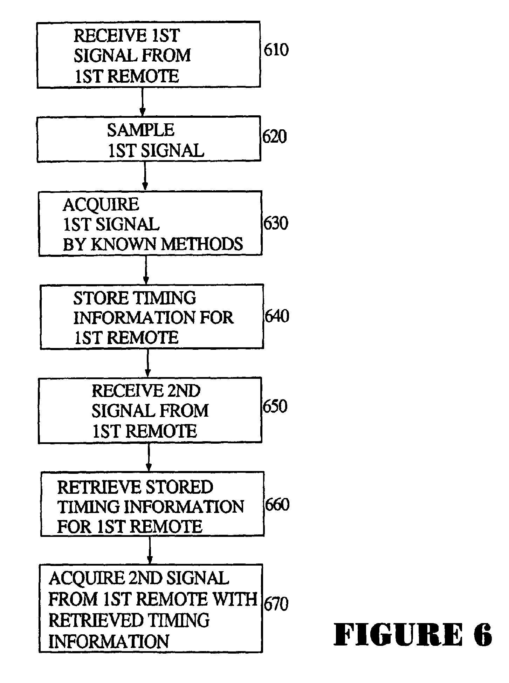

Figure 6 is a block diagram illustrating a method according to the present invention for reacquiring a signal from a remote. In the step 610, the hub receives a first signal, S₁, in a first frame, F₁, from a first remote, designated R₁ for this example. The receiver at the hub demodulates S1 by any known method in the art. The demodulated signal S₁ is then sampled at step 620 at a predetermined sampling rate. The sampling rate is based on a predetermined integer number of samples taken per ATU. At step 630, S₁ is acquired by any known method in the art in order to get the timing information, alternatively known as the phase information, of R₁, such as by use of a unique word. The timing information for R₁ is stored at the hub in step 640 in a memory module, such as a random access memory, a register, or the like. At step 650, the hub receives a second signal, S₂, from R₁ and demodulates S₂ by known methods in the art. The timing information for R₁, derived from a previously-received signal or signals from R₁ such as S₁, is retrieved from memory, at step 660. The retrieved timing information for R₁ is used to acquire signal S₂ without the need for timing information that may be contained within S₂.

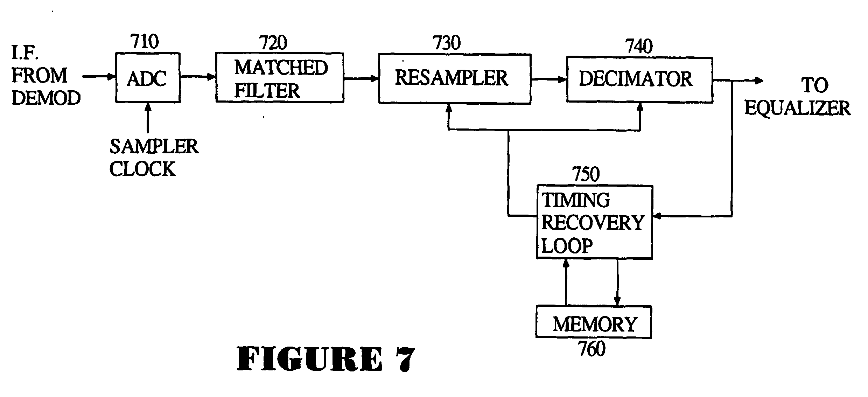

Figure 7 is a functional block diagram of a hub receiver according to the inventive system. A first remote sends a signal which is received at the hub. The first remote, and all other remotes in communication with the hub, operate with automatic frequency control circuitry so as to maintain a constant frequency output. Once the signal from the remote is received at the hub, an intermediate frequency ("IF') signal is generated, as is known in the art, which is input to the analog to digital converter 710 ("ADC"). The ADC samples the IF signal at a rate set by the sampler clock by known methods. The output of the ADC is sent to the matched filter 720 and then to the resampler 730. The purpose of the resampler is to change the relative timing phase of the input samples to the resampler so as to sample the symbol at the optimum time, as will be described in more detail below. The output of the resampler is sent to the decimator 740 which outputs an integral number of samples per symbol. The output of the decimator is sent to the equalizer for further signal processing. The output of the decimator is also fed back to the timing recovery loop 750 which determines the timing phase offset from the output of the decimator. The timing phase offset is stored in memory 760 for later retrieval and use as discussed below. The output of the timing recovery loop 750, which is the timing phase offset, is fed into the resampler 730 and the decimator 740 in order to sample the input symbols for each at the proper time. Once the proper timing phase is determined for a remote, the hub no longer must calculate the timing of subsequent symbols.

During operation, the sampler clock operates independently from the resampler 730 and the decimator 740. The sampler clock and the resampler sample an incoming symbol at the same rate (samples/symbol) but not necessarily at the same time and/or phase. As discussed above, the resampler and the decimator are controlled by the timing phase offset which is output from the timing recovery loop 750.

When a signal from a first remote is initially received at the hub, the signal follows the path in Figure 7. At the resampler 730, since the timing phase of the signal from the first remote is unknown, an estimate is made and refined until the signal from the first remote is acquired. For a preferred embodiment, the resampler (and the sampler clock) operate at 2.625 samples/symbol. The output of the resampler is sent to the decimator 740 which outputs an integral number of samples/symbol. For a preferred embodiment, the output of the decimator is 2 samples/symbol. This output is then fed into the timing recovery loop 750 which determines the timing phase offset. The timing phase offset is then stored in the memory 760 for later retrieval and use. The output of the timing recovery loop sets a cadence for the resampler and the decimator so those devices sample the subsequent symbols from the first remote at the proper time.

Since the first remote is operating with automatic frequency control and therefore transmitting signals at a constant, predetermined frequency, and since the granularity for the system is known to be an ATU, which is of a known time duration, the periodicity of the timing recovery loop allows for reacquisition of a later-transmitted signal from the first remote without the need to calculate the timing of the later-transmitted signal. This is due to the fact that the timing phase offset calculated for the first remote will be the timing phase offset for all later-transmitted signals from the first remote since those signals are constrained in frequency by the automatic frequency controller and the time slots for reception of the first remote's signals at the hub are constrained to starting only at the beginning of an ATU. The present inventive system and method exploits the resultant periodicity to acquire later-transmitted signals.

Since the hub may communicate with more than one remote, the hub must initially acquire and store the timing phase offset for each remote. For symbols/signals received from a second remote after the timing phase offset for the second remote has been determined, the hub can reacquire the signal from the second remote by accessing the timing phase offset for the second remote from the memory 760, and feed that timing phase offset into the resampler 730 and the decimator 740. The hub only needs to have one timing recovery loop for all the remotes with which it communicates so long as the timing phase offsets for each of the remotes in communication with the hub can be stored and retrieved for reacquiring later-received symbols/signals.

The basic design criteria for the inventive system and method is that the ATU is the finest granularity of the system. Each time slot, each forward/reverse link, and each frame contain an integer number of ATUs. One of skill in the art would understand that a different integer number of ATUs comprise a time slot than comprise a forward/reverse link, and yet a different integer number of ATUs comprise a frame. The ATU itself is defined as the time to transmit a predetermined number of symbols. One embodiment of the invention sets the ATU as the time to transmit sixteen symbols. The preferred embodiment adds the additional limitation of frame duration as 1.5 msec.

As is known in the art, the baud rate is the number of symbols transmitted per second. Therefore, different baud rates allow for different numbers of symbols to be transmitted per frame. The preferred embodiment has the following relationship between the baud rate and the number of ATUs per frame, where Mbaud is mega baud:

| Baud Rate (Mbaud/sec) | No. ATUs/frame |
|---|---|
| 10.752 | 1008 |
| 21.504 | 2016 |
| 40.064 | 3756 |
| 43.008 | 4032 |

A preferred embodiment samples at the hub the incoming signal from the remotes at a rate such that there are 42 samples per ATU, which is 2.625 samples per symbol. Another preferred embodiment maintains a control ratio, the ratio of the sampling rate to the baud rate, of 5.25. One of skill in the art would realize that all of these numbers may be changed, while maintaining the proper interrelationships, so long as there are an integer number of samples per ATU and an integer number of ATU per time slot.

While preferred embodiments of the present invention have been described, it is to be understood that the embodiments described are illustrative only and that the scope of the invention is to be defined solely by the appended claims when accorded a full range of equivalence, many variations and modifications naturally occurring to those of skill in the art from a perusal hereof.

## Claims

1. A method of communicating signals in a repeating frame format (201) between a hub (101, 102, 103) and plural fixed remotes (150-154) in a point-to-multipoint, time division multiple access wireless communication system,
wherein each of the frames comprises a predetermined number of airlink timing units ATUs and a predetermined number of time slots each of which comprise an integer number of ATUs,
wherein the duration of the time slots within a one of the frames may be different one from the other so long as each of the time slots contains an integer number of ATUs and the frame contains the predetermined number of ATUs, and
wherein signals from one of the remotes (150-154) may be transmitted in a different time slot in different frames thereby requiring reacquisition of the signal from information contained within the signal each frame, the method comprising:
receiving at the hub (101, 102, 103) a first signal in a first time slot of a first frame from a first one of the plurality of remotes (150-154),
sampling the first signal at a predetermined sampling rate such that an integer number of samples occur per ATU;
acquiring the first signal at the hub from information contained within the signal; the method being **characterized by**
storing at the hub (101, 102, 103) timing information representative of the timing of the first signal;
receiving at the hub (101, 102, 103) a second signal in a second time slot in a subsequent frame from the first remote;
retrieving at the hub (101, 102, 103) the timing information for the first signal; and
acquiring the second signal with the timing information from the first signal.

2. The method of claim 1 wherein the communication system operates in the millimeter wave frequency spectrum.

3. The method of claim 2 wherein the frequency spectrum is 1.4 GHz to 38 GHz.

4. The method of one of the preceding claims wherein the communication system is one of:
a time division duplex system;
an adaptive time division duplex system; and
a frequency division duplex system.

5. The method of one of the preceding claims wherein the communication system includes automatic frequency control.

6. The method of one of the preceding claims wherein the second time slot in the subsequent frame is at a frame position different than the frame position of the first time slot in the first frame.

7. The method of claim 6 wherein the step of acquiring the second signal with the timing information from the first signal is accomplished by restricting the start of the second time slot to an integer number of ATUs after the beginning of the subsequent frame.

8. The method of claim 7 wherein the predetermined number of time slots per frame is thirty-two.

9. The method of claim 7 or 8 wherein the number of samples per ATU is forty-two.

10. The method of claim 7, 8 or 9 wherein the first and second signals are received at a predetermined baud rate.

11. The method of claim 10 wherein the ratio of the sampling rate to the received baud rate is 5.25.

12. The method of claim 11 wherein the predetermined baud rate is dynamically adjustable.

13. The method of claim 12 wherein the baud rate of the first signal is different than the baud rate of the second signal.

14. The method of claim 13 wherein the ratio of the number of samples taken to the number of received symbols is 2.625.

15. The method of one of the preceding claims wherein the hub is adapted to receive a replica of the carrier wave of the signal from the first one of the plurality of remotes, and
wherein the timing information is a phase offset between the carrier wave of the signal from the first one of the plurality of remotes and the replica carrier wave.

16. The method of claim 15 wherein the replica carrier wave is generated locally at the hub.

17. The method of one of the preceding claims wherein the information contained within the first signal for acquiring the first signal is a unique word.

18. The method of one of the preceding claims wherein the hub stores timing information for each of the plurality of remotes.

19. The method of claim 18 wherein the timing information for each of the plurality of hubs is stored in a separate register.

20. The method of one of the preceding claims wherein the hub sets the signal reception sequence for the remotes and transmits the signal reception sequence to each of the plurality of remotes.

21. The method of claim 20 wherein the number of remotes exceeds the number of time slots in a frame.

22. The method of one of the preceding claims wherein the timing information for the first signal is updated with timing information derived from information contained within the second signal.

23. The method of Claim 22 wherein the updated timing information is stored at the hub in place of the timing information representative of the timing of the first signal.

24. A system for communicating signals in a repeating frame format (201) between a hub (101, 102, 103) and plural fixed remotes (150-154) in a point-to-multipoint, time division multiple access wireless communication system,
wherein each of the frames comprises a predetermined number of airlink timing units ATUs and a predetermined number of time slots each of which comprise an integer number of ATUs,
wherein the duration of the time slots within a one of the frames may be different one from the other so long as each of the time slots contains an integer number of ATUs and the frame contains the predetermined number of ATUs, and
wherein signals from one of the remotes (150-154) may be transmitted in a different time slot in different frames thereby requiring reacquisition of the signal from information contained within the signal each frame, the system comprising:
receiving means at the (101, 102, 103) for receiving a first signal in a first time slot of a first frame from a first one of the plurality of remotes (150-154),
sampling means for sampling the first signal at a predetermined sampling rate such that an integer number of samples occur per ATU;
first acquiring means for acquiring the first signal at the hub from information contained within the signal; the system being **characterized by**
memory for storing at the hub (101, 102, 103) timing information representative of the timing of the first signal;
said receiving means for receiving at the hub (101, 102, 103) a second signal in a second time slot in a subsequent frame from the first remote;
means for retrieving at the hub (101, 102, 103) the timing information for the first signal; and
second acquiring means for acquiring the second signal with the timing information from the first signal.

25. The system of claim 24 wherein the communication system operates in the millimeter wave frequency spectrum.

26. The system of claim 25 wherein the frequency spectrum is 1.4 GHz to 38 GHz.

27. The system of one of claims 24 to 26 wherein the communication system is one of:
a time division duplex system;
an adaptive time division duplex system; and
a frequency division duplex system.

28. The system of one of claims 24 to 27 wherein the communication system includes automatic frequency control.

29. The system of one of claims 24 to 28 wherein the second time slot in the subsequent frame is at a frame position different than the frame position of the first time slot in the first frame.

30. The system of claim 29 wherein the system is adapted to accomplish the step of acquiring the second signal with the timing information from the first signal by restricting the start of the second time slot to an integer number of ATUs after the beginning of the subsequent frame.

31. The system of claim 29 wherein the predetermined number of time slots per frame is thirty-two.

32. The system of claim 29 wherein the number of samples per ATU is forty-two.

33. The system of claim 29 wherein the receiving means are adapted to receive the first and second signals at a predetermined baud rate.

34. The system of claim 33 wherein the ratio of the sampling rate to the received baud rate is 5.25.

35. The system of claim 34 wherein the predetermined baud rate is dynamically adjustable.

36. The system of claim 35 wherein the baud rate of the first signal is different than the baud rate of the second signal.

37. The system of claim 36 wherein the ratio of the number of samples taken to the number of received symbols is 2.625.

38. The system of one of claims 24 to 37 wherein said hub is adapted to receive a replica of the carrier wave of the signal from the first one of the plurality of remotes, and
wherein the timing information is a phase offset between the carrier wave of the signal from the first one of the plurality of remotes and the replica carrier wave.

39. The system of claim 38 wherein the replica carrier wave is generated locally at the hub.

40. The system of claim 39 wherein the replica carrier wave is generated by a voltage controlled oscillator.

41. The system of one of claims 24 to 40 wherein the information contained within the first signal for acquiring the first signal is a unique word.

42. The system of one of claims 24 to 41 wherein said hub (101, 102, 103) is adapted to store timing informa-<SHY> tion for each of the plurality of remotes.

43. The system of claim 42 wherein the memory is adapted to store the timing information for each of the plurality of hubs in a separate register.

44. The system of one of claims 24 to 43 wherein the hub (101, 102, 103) is adapted to set the signal reception sequence for the remotes and to transmit the signal reception sequence to each of the plurality of remotes (150-154).

45. The system of claim 44 wherein the number of remotes exceeds the number of time slots in a frame.

46. The system of one of claims 24 to 45 wherein the system is adapted to update the timing information for the information for the first signal with timing information derived from information contained within the second signal.

47. The system of claim 46 wherien the memory is adapted to store the updated timing information at the hub in place of the timing information representative of the timing of the first signal.

48. The system of one of claims 24 to 47 wherein said receiving means includes a modem.

49. The system of one of claims 24 to 48 wherein said first acquiring means is a phase lock loop.

50. The system of one of claims 24 to 49 wherein said means for retrieving is a digital processor.

51. The system of one of claims 24 to 50 wherein said second acquiring means includes a timing recovery loop.

## Patentansprüche

1. Verfahren zum Übertragen von Signalen in einem sich wiederholenden Rahmenformat (201) zwischen einer Hub (101, 102, 103) und mehreren festen entfernten Einrichtungen (150 bis 154) in einem drahtlosen Punkt-zu-Mehrpunkt-Kommunikationssystem mit Zeitmultiplexzugriff, TDMA,
wobei jeder der Rahmen eine vorgegebene Anzahl von Airlink-Zeiteinheiten, ATUs und eine vorgegebene Anzahl von Zeitschlitzen, die jeweils eine ganzzahlige Anzahl von ATUs umfassen, aufweist,
wobei die Dauer der Zeitschlitze innerhalb eines der Rahmen unterschiedlich sein kann, solange jeder der Zeitschlitze eine ganzzahlige Anzahl von ATUs umfaßt und der Rahmen die vorgegebene Anzahl von ATUs aufweist, und
wobei Signale von einer der entfernten Einrichtungen (150 bis 154) in einem anderen Zeitschlitz in verschiedenen Rahmen übertragen werden kann, wodurch eine Neuerfassung des Signals aus Information, die in dem Signal enthalten ist, für jeden Rahmen erforderlich ist, mit folgenden Verfahrensschritten:
Empfangen eines ersten Signals in einem ersten Zeitschlitz eines ersten Rahmens von einer ersten der mehreren entfernten Einrichtungen (150 bis 154) bei der Hub (101, 102, 103);
Abtasten des ersten Signals mit einer vorgegebenen Abtastrate, so daß eine ganzzahlige Anzahl von Abtastwerten pro ATU erhoben werden;
Erfassen des ersten Signals bei der Hub aufgrund von Information, die in dem Signal enthalten ist,
**gekennzeichnet durch**:
Speichern von Zeitinformation, die für das Timing des ersten Signals repräsentativ ist, bei der Hub (101, 102, 103);
Empfangen eines zweiten Signals in einem zweiten Zeitschlitz in einem nachfolgenden Rahmen von der ersten entfernten Einrichtung bei der Hub (101, 102, 103);
Wiedergewinnen der Zeitinformation für das erste Signal bei der Hub (101, 102, 103); und
Erfassen des zweiten Signals mit der Zeitinformation aus dem ersten Signal.

2. Verfahren nach Anspruch 1, wobei das Kommunikationssystem in dem Millimeter-Wellen-Frequenzspektrum arbeitet.

3. Verfahren nach Anspruch 2, wobei das Frequenzspektrum 1,4 GHz bis 38 GHz ist.

4. Verfahren nach einem der vorangehenden Ansprüche, wobei das Kommunikationssystem eins der folgenden Systeme ist:
ein Zeit-Duplexsystem;
ein adaptives Zeit-Duplexsystem; und
ein Frequenz-Duplexsystem.

5. Verfahren nach einem der vorangehenden Ansprüche, wobei das Kommunikationssystem eine automatische Frequenzsteuerung umfaßt.

6. Verfahren nach einem der vorangehenden Ansprüche, wobei der zweite Zeitschlitz in dem nächsten Rahmen bei einer Rahmenposition liegt, die sich von der Rahmenposition des ersten Zeitschlitzes in dem ersten Rahmen unterscheidet.

7. Verfahren nach Anspruch 6, wobei der Schritt des Erfassens des zweiten Signals mit der Zeitinformation aus dem ersten Signal durchgeführt wird, indem der Beginn des zweiten Zeitschlitzes auf eine ganzzahlige Anzahl von ATUs nach dem Beginn des nachfolgenden Rahmens begrenzt wird.

8. Verfahren nach Anspruch 7, wobei die vorgegebene Anzahl von Zeitschlitzen pro Rahmen zweiunddreißig ist.

9. Verfahren nach Anspruch 7 oder 8, wobei die Anzahl der Abtastwerte pro ATU zweiundvierzig ist.

10. Verfahren nach Anspruch 7, 8 oder 9, wobei das erste und das zweite Signal mit einer vorgegebenen Baud-Rate empfangen werden.

11. Verfahren nach Anspruch 10, wobei das Verhältnis der Abtastrate zu der empfangenen Baud-Rate 5,25 ist.

12. Verfahren nach Anspruch 11, wobei die vorgegebene Baud-Rate dynamisch einstellbar ist.

13. Verfahren nach Anspruch 12, wobei die Baud-Rate des ersten Signals sich von der Baud-Rate des zweiten Signals unterscheidet.

14. Verfahren nach Anspruch 13, wobei das Verhältnis der Anzahl der Abtastwerte zur Anzahl der empfangenen Symbole 2,625 ist.

15. Verfahren nach einem der vorangehenden Ansprüche, wobei die Hub eine Replika der Trägerwelle des Signals von der ersten der mehreren entfernten Einrichtungen empfangen kann und
wobei die Zeitinformation ein Phasenoffset zwischen der Trägerwelle des Signals von der ersten der mehreren entfernten Einrichtungen und der Replika-Trägerwelle ist.

16. Verfahren nach Anspruch 15, wobei die Replika-Trägerwelle lokal bei der Hub erzeugt wird.

17. Verfahren nach einem der vorangehenden Ansprüche, wobei die Information, die in dem ersten Signal zum Erfassen des ersten Signals enthalten ist, ein eindeutiges Wort ist.

18. Verfahren nach einem der vorangehenden Ansprüche, wobei die Hub Zeitinformation für jede der mehreren entfernten Einrichtungen speichert.

19. Verfahren nach Anspruch 18, wobei die Zeitinformation für jede der mehreren Hubs in einem separaten Register gespeichert wird.

20. Verfahren nach einem der vorangehenden Ansprüche, wobei die Hub die Signalempfangssequenz für die entfernten Einrichtungen einstellt und die Signalempfangssequenz an jede der mehreren entfernten Einrichtungen sendet.

21. Verfahren nach Anspruch 20, wobei die Anzahl der entfernten Einrichtungen die Anzahl der Zeitschlitze in einem Rahmen übersteigt.

22. Verfahren nach einem der vorangehenden Ansprüche, wobei die Zeitinformation für das erste Signal mit der Zeitinformation, die aus der Information, die in dem zweiten Signal enthalten ist, abgeleitet wird, aktualisiert wird.

23. Verfahren nach Anspruch 22, wobei die aktualisierte Zeitinformation bei der Hub anstelle von Zeitinformation, die für das Timing des ersten Signals repräsentativ ist, gespeichert wird.

24. System zum Übertragen von Signalen in einem sich wiederholenden Rahmenformat (201) zwischen einer Hub (101, 102, 103) und mehreren festen entfernten Einrichtungen (150 bis 154) in einem drahtlosen Punkt-zu-Mehrpunkt-Kommunikationssystem mit Zeitmultiplexzugriff, TDMA,
wobei jeder der Rahmen eine vorgegebene Anzahl von Airlink-Zeiteinheiten, ATUs und eine vorgegebene Anzahl von Zeitschlitzen, die jeweils eine ganzzahlige Anzahl von ATUs umfassen, aufweist,
wobei die Dauer der Zeitschlitze innerhalb eines der Rahmen unterschiedlich sein kann, solange jeder der Zeitschlitze eine ganzzahlige Anzahl von ATUs umfaßt und der Rahmen die vorgegebene Anzahl von ATUs aufweist, und
wobei Signale von einer der entfernten Einrichtungen (150 bis 154) in einem anderen Zeitschlitz in verschiedenen Rahmen übertragen werden kann, wodurch eine Neuerfassung des Signals aus Information, die in dem Signal enthalten ist, für jeden Rahmen erforderlich ist, mit folgenden Merkmalen:
eine Empfangseinrichtung an der Hub (101, 102, 103) zum Empfangen eines ersten Signals in einem ersten Zeitschlitz eines ersten Rahmens von einer ersten der mehreren entfernten Einrichtungen (150 bis 154);
eine Abtasteinrichtung zum Abtasten des ersten Signals mit einer vorgegebenen Abtastrate, so daß eine ganzzahlige Anzahl von Abtastwerten pro ATU erhoben werden; eine erste Erfassungeinrichtung zum Erfassen des ersten Signals bei der Hub aufgrund von Information, die in dem Signal enthalten ist,
**gekennzeichnet durch**:
ein Speicher zum Speichern von Zeitinformation, die für das Timing des ersten Signals repräsentativ ist, bei der Hub (101, 102, 103);
die Empfangseinrichtung zum Empfangen eines zweiten Signals in einem zweiten Zeitschlitz in einem nachfolgenden Rahmen von der ersten entfernten Einrichtung bei der Hub (101, 102, 103);
eine Einrichtung zum Wiedergewinnen der Zeitinformation für das erste Signal bei der Hub (101, 102, 103); und
eine zweite Erfassungseinrichtung zum Erfassen des zweiten Signals mit der Zeitinformation aus dem ersten Signal.

25. System nach Anspruch 24, wobei das Kommunikationssystem in dem Millimeter-Wellen-Frequenzspektrum arbeitet.

26. System nach Anspruch 25, wobei das Frequenzspektrum 1,4 GHz bis 38 GHz ist.

27. System nach einem der Ansprüche 24 bis 26, wobei das Kommunikationssystem eins der folgenden Systeme ist:
ein Zeit-Duplexsystem;
ein adaptives Zeit-Duplexsystem; und
ein Frequenz-Duplexsystem.

28. System nach einem der Ansprüche 24 bis 27, wobei das Kommunikationssystem eine automatische Frequenzsteuerung umfaßt.

29. System nach einem der Ansprüche 24 bis 28, wobei der zweite Zeitschlitz in dem nächsten Rahmen bei einer Rahmenposition liegt, die sich von der Rahmenposition des ersten Zeitschlitzes in dem ersten Rahmen unterscheidet.

30. System nach Anspruch 29, wobei das System dazu ausgelegt ist, den Schritt des Erfassens des zweiten Signals mit der Zeitinformation aus dem ersten Signal durchzuführen, indem der Beginn des zweiten Zeitschlitzes auf eine ganzzahlige Anzahl von ATUs nach dem Beginn des nachfolgenden Rahmens begrenzt wird.

31. System nach Anspruch 29, wobei die vorgegebene Anzahl von Zeitschlitzen pro Rahmen zweiunddreißig ist.

32. System nach Anspruch 29, wobei die Anzahl der Abtastwerte pro ATU zweiundvierzig ist.

33. System nach Anspruch 29, wobei die Empfangseinrichtung dazu ausgelegt ist, das erste und das zweite Signal mit einer vorgegebenen Baud-Rate zu empfangen.

34. System nach Anspruch 33, wobei das Verhältnis der Abtastrate zu der empfangenen Baud-Rate 5,25 ist.

35. System nach Anspruch 34, wobei die vorgegebene Baud-Rate dynamisch einstellbar ist.

36. System nach Anspruch 35, wobei die Baud-Rate des ersten Signals sich von der Baud-Rate des zweiten Signals unterscheidet.

37. System nach Anspruch 36, wobei das Verhältnis der Anzahl der Abtastwerte zur Anzahl der empfangenen Symbole 2,625 ist.

38. System nach einem der Ansprüche 24 bis 37, wobei die Hub eine Replika der Trägerwelle des Signals von der ersten der mehreren entfernten Einrichtungen empfangen kann und
wobei die Zeitinformation ein Phasenoffset zwischen der Trägerwelle des Signals von der ersten der mehreren entfernten Einrichtungen und der Replika-Trägerwelle ist.

39. System nach Anspruch 38, wobei die Replika-Trägerwelle lokal bei der Hub erzeugt wird.

40. System nach Anspruch 39, wobei die Replika-Trägerwelle von einem spannungsgesteuerten Oszillator erzeugt wird.

41. System nach einem der Ansprüche 24 bis 40, wobei die Information, die in dem ersten Signal zum Erfassen des ersten Signals enthalten ist, ein eindeutiges Wort ist.

42. System nach einem der Ansprüche 24 bis 41, wobei die Hub (101, 102, 103) Zeitinformation für jede der mehreren entfernten Einrichtungen speichern kann.

43. System nach Anspruch 42, wobei der Speicher die Zeitinformation für jede der mehreren Hubs in einem separaten Register speichern kann.

44. System nach einem der Ansprüche 24 bis 43, wobei die Hub (101, 102, 103) die Signalempfangssequenz für die entfernten Einrichtungen einstellt und die Signalempfangssequenz an jede der mehreren entfernten Einrichtungen senden kann.

45. System nach Anspruch 44, wobei die Anzahl der entfernten Einrichtungen die Anzahl der Zeitschlitze in einem Rahmen übersteigt.

46. System nach einem der Ansprüche 24 bis 45, wobei das System die Zeitinformation für das erste Signal mit der Zeitinformation, die aus der Information, die in dem zweiten Signal enthalten ist, abgeleitet wird, aktualisieren kann.

47. System nach Anspruch 46, wobei der Speicher die aktualisierte Zeitinformation bei der Hub anstelle von Zeitinformation, die für das Timing des ersten Signals repräsentativ ist, gespeichert wird.

48. System nach einem der Ansprüche 24 bis 47, wobei die Empfangseinrichtung ein Modem aufweist.

49. System nach einem der Ansprüche 24 bis 48, wobei die erste Erfassungseinrichtung eine phasenstarre Schleife ist.

50. System nach einem der Ansprüche 24 bis 49, wobei die Einrichtung zum Wiedergewinnen ein digitaler Prozessor ist.

51. System nach einem der Ansprüche 24 bis 50, wobei die zweite Erfassungseinrichtung eine Zeitwiedergewinnungs-Schleife umfaßt.

## Revendications

1. Procédé de communication de signaux sous un format de trame répétitif (201) entre un concentrateur (101, 102, 103) et plusieurs sites distants fixes (150 à 154) dans un système de communications sans fil à accès multiple par répartition dans le temps d'un point vers des points multiples,
dans lequel chacune des trames comprend un nombre prédéterminé d'unités de synchronisation de liaison hertzienne (ATU) et un nombre prédéterminé de tranches de temps dont chacune comprend un nombre entier d'unités ATU,
dans lequel la durée des tranches de temps à l'intérieur de l'une des trames peut être une durée différente de l'autre tant que chacune des tranches de temps contient un nombre entier d'unités ATU et que la trame contient le nombre prédéterminé d'unités ATU, et
dans lequel des signaux provenant de l'un des sites distants (150 à 154) peuvent être transmis dans une tranche de temps différente dans des trames différentes en requérant ainsi une nouvelle acquisition du signal d'après des informations contenues à l'intérieur du signal de chaque trame, le procédé comprenant :
la réception au niveau du concentrateur (101, 102, 103) d'un premier signal dans une première tranche de temps d'une première trame depuis un premier site distant parmi la pluralité de sites distants (150 à 154),
l'échantillonnage du premier signal à une fréquence d'échantillonnage prédéterminée de sorte qu'un nombre entier d'échantillonnage ait lieu par unité ATU,
l'acquisition du premier signal au niveau du concentrateur d'après des informations contenues à l'intérieur du signal, le procédé étant **caractérisé par**
la mémorisation au niveau du concentrateur (101, 102, 103) d'informations de synchronisation représentatives de la synchronisation du premier signal,
la réception au niveau du concentrateur (101, 102, 103) d'un second signal dans une seconde tranche de temps dans une trame suivante depuis le premier site distant,
la récupération au niveau du concentrateur (101, 102, 103) des informations de synchronisation pour le premier signal, et
l'acquisition du second signal avec les informations de synchronisation provenant du premier signal.

2. Procédé selon la revendication 1, dans lequel le système de communications fonctionne dans le spectre de fréquences des ondes millimétriques.

3. Procédé selon la revendication 2, dans lequel le spectre de fréquence est de 1,4 GHz à 38 GHz.

4. Procédé selon l'une des revendications précédentes, dans lequel le système de communications est l'un de :
un système de duplexage à répartition dans le temps,
un système de duplexage à répartition dans le temps adaptatif, et
un système de duplexage à répartition en fréquence.

5. Procédé selon l'une des revendications précédentes, dans lequel le système de communications comprend une commande de fréquence automatique.

6. Procédé selon l'une des revendications précédentes, dans lequel la seconde tranche de temps de la trame suivante est à une position de trame différente de la position de trame de la première tranche de temps dans la'première trame.

7. Procédé selon la revendication 6, dans lequel l'étape d'acquisition du second signal avec les informations de synchronisation provenant du premier signal, est accomplie en limitant le début de la seconde tranche de temps à un nombre entier d'unités ATU après le début de la trame suivante.

8. Procédé selon la revendication 7, dans lequel le nombre prédéterminé de tranches de temps par trame est de trente-deux.

9. Procédé selon la revendication 7 ou 8, dans lequel le nombre des échantillonnages par unité ATU est de quarante-deux.

10. Procédé selon la revendication 7, 8 ou 9, dans lequel les premier et second signaux sont reçus à un débit en bauds prédéterminé.

11. Procédé selon la revendication 10, dans lequel le rapport de la fréquence d'échantillonnage sur le débit en bauds reçu est de 5,25.

12. Procédé selon la revendication 11, dans lequel le débit en bauds prédéterminé est ajustable dynamiquement.

13. Procédé selon la revendication 12, dans lequel le débit en bauds du premier signal est différent du débit en bauds du second signal.

14. Procédé selon la revendication 13, dans lequel le rapport du nombre des échantillonnages pris sur le nombre des symboles reçus est de 2,625.

15. Procédé selon l'une des revendications précédentes, dans lequel le concentrateur est conçu pour recevoir une réplique de l'onde porteuse du signal depuis le premier site de la pluralité de sites distants, et
dans lequel les informations de synchronisation représentent un décalage de phase entre l'onde porteuse du signal provenant du premier site de la pluralité de sites distants et l'onde porteuse de la réplique.

16. Procédé selon la revendication 15, dans lequel l'onde porteuse de la réplique est générée localement au niveau du concentrateur.

17. Procédé selon l'une des revendications précédentes, dans lequel les informations contenues à l'intérieur du premier signal pour acquérir le premier signal représentent un mot unique.

18. Procédé selon l'une des revendications précédentes, dans lequel le concentrateur mémorise des informations de synchronisation pour chaque site de la pluralité de sites distants.

19. Procédé selon la revendication 18, dans lequel les informations de synchronisation pour chaque concentrateur de la pluralité de concentrateurs sont mémorisées dans un registre séparé.

20. Procédé selon l'une des revendications précédentes, dans lequel le concentrateur établit la séquence de réception de signaux pour les sites distants et transmet la séquence de réception de signaux à chaque site de la pluralité de sites distants.

21. Procédé selon la revendication 20, dans lequel le nombre des sites distants dépasse le nombre des tranches de temps dans une trame.

22. Procédé selon l'une des revendications précédentes, dans lequel les informations de synchronisation pour le premier signal sont mises à jour avec les informations de synchronisation obtenues à partir des informations contenues à l'intérieur du second signal.

23. Procédé selon la revendication 22, dans lequel les informations de synchronisation mises à jour sont mémorisées au niveau du concentrateur à la place des informations de synchronisation représentatives de la synchronisation du premier signal.

24. Système destiné à communiquer des signaux dans un format de trame répétitif (201) entre un concentrateur (101, 102, 103) et plusieurs sites distants fixes (150 à 154) dans un système de communications sans fil à accès multiple par répartition dans le temps d' un point vers des points multiples,
dans lequel chacune des trames comprend un nombre prédéterminé d'unités de synchronisation de liaison hertzienne (ATU) et un nombre prédéterminé de tranches de temps dont chacune comprend un nombre entier d'unités ATU,
dans lequel la durée des tranches à l'intérieur de l'une des trames peut être différente de l'une à l'autre tant que chacune des tranches de temps contient un nombre entier d'unités ATU et que la trame contient le nombre prédéterminé d'unités ATU, et
dans lequel des signaux provenant de l'un des sites distants (150 à 154) peuvent être transmis dans des tranches de temps différentes dans des trames différents en requérant ainsi une nouvelle acquisition du signal à partir des informations contenues à l'intérieur du signal de chaque trame, le système comprenant :
un moyen de réception au niveau du concentrateur (101, 102, 103) destiné à recevoir un premier signal dans une première tranche de temps d'une première trame depuis un premier site de la pluralité de sites distants (150 à 154),
un moyen d'échantillonnage destiné à échantillonner le premier signal à une fréquence d'échantillonnage prédéterminée telle qu'un nombre entier d'échantillonnages ait lieu par unité ATU,
un premier moyen d'acquisition destiné à acquérir le premier signal au niveau du concentrateur à partir des informations contenues à l'intérieur du signal, le système étant **caractérisé par**
une mémoire destinée à mémoriser au niveau du concentrateur (101, 102, 103) des informations de synchronisation représentatives de la synchronisation du premier signal, ledit moyen de réception destiné à recevoir au niveau du concentrateur (101, 102, 103) un second signal dans une seconde tranche de temps dans une trame suivante depuis le premier site distant,
un moyen destiné à récupéré au niveau du concentrateur (101, 102, 103) les informations de synchronisation pour le premier signal, et
un second moyen d'acquisition destiné à acquérir le second signal avec les informations de synchronisation provenant du premier signal.

25. Système selon la revendication 24, dans lequel le système de communications fonctionne dans le spectre de fréquences des ondes millimétriques.

26. Système selon la revendication 25, dans lequel, le spectre de fréquences est de 1,4 GHz à 38 GHz.

27. Système selon l'une des revendications 24 à 26, dans lequel le système de communications est l'un de :
un système de duplexage à répartition dans le temps,
un système de duplexage à répartition dans le temps adaptatif, et
un système de duplexage à répartition de fréquence.

28. Système selon l'une des revendications 24 à 27, dans lequel le système de communications comprend une commande de fréquence automatique.

29. Système selon l'une des revendications 24 à 28, dans lequel la seconde tranche de temps dans la trame suivante à une position de trame différente de la position de trame de la première tranche dé temps dans la première trame.

30. Système selon la revendication 29, dans lequel le système est conçu pour accomplir l'étape d'acquisition du second signal' avec les informations de synchronisation provenant du premier signal en limitant le début de la seconde tranche de temps à un nombre entier d'unités ATU après le début de la trame suivante.

31. Système selon la revendication 29, dans lequel le nombre prédéterminé de tranches de temps par trame est de trente-deux.

32. Système selon la revendication 29, dans lequel le nombre des. échantillonnages par unité ATU est de quarante-deux.

33. Système selon la revendication 29, dans lequel le moyen de réception est conçu pour recevoir les premier et second signaux à un débit en bauds prédéterminé.

34. Système selon la revendication 33, dans lequel le rapport de la fréquence d'échantillonnage sur le débit en bauds est de 5,25.

35. Système selon la revendication 34, dans lequel le débit en bauds prédéterminé est ajustable dynamiquement.

36. Système selon la revendication 35, dans lequel le débit en bauds du premier signal est différent du débit en bauds du second signal.

37. Système selon la revendication 36, dans lequel le rapport du nombre des échantillonnages pris sur le nombre des symboles reçus est de 2,625.

38. Système selon l'une des revendications 24 à 37, dans lequel ledit concentrateur est conçu pour recevoir une réplique de l'onde porteuse du signal depuis le premier site de la pluralité de sites distants, et
dans lequel les informations de synchronisation représentent un décalage de phase entre l'onde porteuse du signal provenant du premier site de la pluralité de sites distants et l'onde porteuse de la réplique.

39. Système selon la revendication 38, dans lequel l'onde porteuse de la réplique est générée localement au niveau du concentrateur.

40. Système selon la revendication 39, dans lequel l'onde porteuse de la réplique est générée par un oscillateur commandé en tension.

41. Système selon l'une des revendications 24 à 40, dans lequel les informations contenues à l'intérieur du premier signal en vue d'acquérir le premier signal représentent un mot unique.

42. Système selon l'une des revendications 24 à 41, dans lequel ledit concentrateur (101, 102, 103) est conçu pour mémoriser des informations de synchronisation pour chaque site de la pluralité de sites distants.

43. Système selon la revendication 42, dans lequel la mémoire est conçue pour mémoriser les informations de synchronisation pour chaque concentrateur de la pluralité de concentrateurs dans un registré séparé.

44. Système selon l'une des revendications 24 à 43, dans lequel le concentrateur (101, 102, 103) est conçu pour établir la séquence de réception de signaux pour les sites distants et pour transmettre la séquence de réception de signaux à chaque site de la pluralité de sites distants (150 à 154).

45. Système selon la revendication 44, dans lequel le nombre des sites distants dépasse le nombre des tranches de temps dans une trame.

46. Système selon l'une des revendications 24 à 45, dans lequel le système est conçu pour mettre à jour les informations de synchronisation pour le premier signal avec des informations de synchronisation obtenues à partir des informations contenues à l'intérieur du second signal.

47. Système selon la revendication 46, dans lequel la mémoire est conçue pour mémoriser les informations de synchronisation mises à jour au niveau du concentrateur à la place des informations de synchronisation représentatives de la synchronisation du premier signal.

48. Système selon l'une des revendications 24 à 47, dans lequel ledit moyen de réception comprend un modulateur-démodulateur.

49. Système selon l'une des revendications 24 à 48, dans lequel ledit premier moyen d'acquisition est une boucle à verrouillage de phase.

50. Système selon l'une des revendications 24 à 49, dans lequel ledit moyen destiné à récupérer, est un processeur numérique.

51. Système selon l'une des revendications 24 à 50, dans lequel ledit second moyen d'acquisition comprend une boucle de récupération de synchronisation.
